# EUROPÄISCHE PATENTANMELDUNG

(11) **EP 4 813 192 A1**
(43) Veröffentlichungstag der Anmeldung: **30.09.2026**
(21) Anmeldenummer: 26155883.7
(22) Anmeldetag: 03.02.2026
(51) Int. Cl.: A01D 41/127, A01D 41/14

(54) **VERFAHREN ZUR STEUERUNG EINES SENSORSYSTEMS EINER LANDWIRTSCHAFTLICHEN ARBEITSMASCHINE**

(30) Priorität: 28.03.2025 DE 102025112250
(71) Anmelder: CLAAS Selbstfahrende Erntemaschinen GmbH, 33428 Harsewinkel (DE)
(72) Erfinder: Neitemeier, Dennis, 59510 Lippetal (DE); Belau, Sven Carsten, 33332 Gütersloh (DE); Dr. Bönig, Ingo, 33330 Gütersloh (DE); Titkemeier, Daniel, 49080 Osnabrück (DE); Dirksen, Matthis, 48231 Warendorf (DE); Look, Stefan, 48231 Warendorf (DE); Biermann, Daniel, 33397 Rietberg (DE); Großegesse, Philipp, 33334 Gütersloh (DE); Niederer, Matthias, 88518 Herbertingen (DE)
(74) Vertreter: CLAAS Gruppe

(57) **Zusammenfassung**

Die vorliegende Erfindung betrifft ein Verfahren zur Steuerung eines Sensorsystems (10) einer landwirtschaftlichen Arbeitsmaschine (1), wobei durch am Vorsatzgerät (5) der Arbeitsmaschine (1) angeordnete optische Sensoren (11) des Sensorsystems (10) ein in Fahrtrichtung (FR) vor dem Vorsatzgerät (5) befindlicher Bereich erfasst wird, wobei die an jeweils einem Tragarm (20) angeordneten optischen Sensoren (11) jeweils durch zumindest einen Aktuator (22) zwischen einer eingeschwenkten Transportposition und einer ausgeschwenkten Betriebsposition überführt werden, wobei zur Einnahme der Transportposition oder der Betriebsposition durch den jeweiligen optischen Sensor (11) der zumindest eine Aktuator (22) in Abhängigkeit von einer durch eine dem Sensorsystem (10) zugeordnete Steuereinheit (12) bestimmten bestehenden Betriebssituation der Arbeitsmaschine (1) automatisch angesteuert wird.

## Beschreibung

Die vorliegende Erfindung betrifft ein Verfahren zur Steuerung eines Sensorsystems einer landwirtschaftlichen Arbeitsmaschine gemäß dem Oberbegriff des Anspruches 1. Weiterhin ist ein Sensorsystem für eine landwirtschaftliche Arbeitsmaschine gemäß dem Oberbegriff des Anspruches 11 Gegenstand der vorliegenden Erfindung.

Aus der EP 2 316 259 B1 ist ein Verfahren zur Steuerung eines Sensorsystems einer als Erntemaschine ausgeführten landwirtschaftlichen Arbeitsmaschine bekannt. Die EP 2 316 259 B1 beschreibt ein Sensorsystem mit zwei optischen Sensoren, die einander gegenüberliegend am Vorsatzgerät der Arbeitsmaschine angeordnet sind. Die optischen Sensoren sind an freien Enden von Parallelogrammführungen befestigt. Die jeweilige Parallelogrammführung ist durch einen Aktuator betätigbar, um die Position des daran befestigten Sensors bezüglich der Längsachse der Erntemaschine zu verändern. Hierzu ist der jeweilige optische Sensor aus einer Randposition, in welcher der optische Sensor seitlich über das Vorsatzgerät hinausragt in eine Parkposition überführbar, in welcher der jeweilige optische Sensor den geringsten Abstand zur Längsachse der Erntemaschine aufweist. In der Parkposition liegen die Parallelogrammführung und der optische Sensor am Vorsatzgerät an. Die Einnahme der Randposition oder der Parkposition durch das Schwenken der jeweiligen Parallelführung erfolgt durch eine manuelle Betätigung oder durch eine Fernbetätigung des Aktuators durch den Bediener aus der Fahrerkabine der Erntemaschine heraus.

Ausgehend vom vorstehend genannten Stand der Technik liegt der Erfindung die Aufgabe zugrunde, ein Verfahren zur Steuerung eines Sensorsystems einer landwirtschaftlichen Arbeitsmaschine sowie ein Sensorsystem für eine landwirtschaftliche Arbeitsmaschine weiterzubilden, um die Betriebssicherheit, Handhabung und Manövrierfähigkeit der Arbeitsmaschine zu verbessern.

Die vorliegende Aufgabe wird durch ein Verfahren mit den Merkmalen des Anspruches 1 gelöst. Weiterhin wird die Aufgabe durch ein Sensorsystem mit den Merkmalen des nebengeordneten Anspruchs 11 gelöst. Vorteilhafte Weiterbildungen sind Gegenstand der abhängigen Ansprüche.

Gemäß dem Anspruch 1 wird ein Verfahren zur Steuerung eines Sensorsystems einer landwirtschaftlichen Arbeitsmaschine vorgeschlagen, wobei durch am Vorsatzgerät der Arbeitsmaschine angeordnete optische Sensoren des Sensorsystems ein in Fahrtrichtung vor dem Vorsatzgerät befindlicher Bereich erfasst wird, wobei die an jeweils einem Tragarm angeordneten optischen Sensoren jeweils durch zumindest einen Aktuator zwischen einer eingeschwenkten Transportposition und einer ausgeschwenkten Betriebsposition überführt werden. Erfindungsgemäß ist vorgesehen, dass zur Einnahme der Transportposition oder der Betriebsposition durch den jeweiligen optischen Sensor der zumindest eine Aktuator in Abhängigkeit von einer durch dem Sensorsystem zugeordnete Steuereinheit bestimmten bestehenden Betriebssituation der Arbeitsmaschine automatisch angesteuert wird.

Das erfindungsgemäße Verfahren bestimmt und berücksichtigt bestehende Betriebssituationen der Arbeitsmaschine, um die optischen Sensoren des Sensorsystems in die für aktuell bestehende die Betriebssituation erforderliche und an die Betriebssituation angepasste optimale Position zu überführen. Insbesondere wird der jeweilige Aktuator durch die dem Sensorsystem zugeordneten Steuereinheit autonom angesteuert. Ein Bediener der Arbeitsmaschine wird hierdurch während des Betriebes der Arbeitsmaschine entlastet, indem die Steuereinheit in Abhängigkeit von der bestimmen Betriebssituation den zumindest einen Aktuator automatisch ansteuert. Durch die betriebssituationsabhängige Einnahme der Transportposition oder der Betriebsposition durch den jeweiligen optischen Sensor können Beschädigungen vermieden werden. Ein weiterer Vorteil besteht darin, dass der eingeschränkten Sicht des Bedieners bei zunehmend breiteren Vorsatzgeräten begegnet werden kann, indem die Bereiche an den äußeren Enden der Vorsatzgeräte in ausgeschwenkter Betriebsposition des jeweiligen optischen Sensors besser einsehbar sind, um das Risiko von Unfällen zu minimieren, insbesondere im Straßenverkehr.

Die Steuereinheit kann Teil des Sensorsystems oder der Arbeitsmaschine sein.

So hat der Bediener die Möglichkeit, sowohl die Bereiche links und rechts des Vorsatzgerätes visuell zu erfassen, ohne sich aktiv, durch Wenden des Kopfes, zu einer Seite zuwenden zu müssen. Dies führt zu einer präziseren Steuerung der Arbeitsmaschine, insbesondere beim Arbeiten an den Rändern von Feldern oder in unregelmäßig geformten Bereichen auf dem Feld.

Insbesondere können die optischen Sensoren in den einander gegenüberliegenden Endbereichen, bevorzugt an den äußeren Enden, des Vorsatzgerätes angeordnet sein.

Bevorzugt kann die bestehende Betriebssituation durch die Auswertung eines von der Steuereinheit empfangenen und/oder von der Steuereinheit oder einer zusätzlichen Steuerungsvorrichtung der Arbeitsmaschine generierten Steuerbefehls zur Ansteuerung eines Arbeitsaggregates der Arbeitsmaschine und/oder eines empfangenen Positionsbestimmungssignals bestimmt werden.

Die bestehende Betriebssituation kann beispielsweise durch einen von der Steuerungsvorrichtung generierten Steuerbefehl bestimmt werden, um das Vorsatzgerät von einer Transportstellung in eine Betriebsstellung und umgekehrt zu überführen. Der empfangene Steuerbefehl kann durch die Steuereinheit ausgewertet werden, um die bestehende Betriebssituation zu bestimmen. Denkbar ist natürlich, dass durch die Steuereinheit auch die Ansteuerung der Arbeitsaggregate der Arbeitsmaschine durchgeführt wird.

Ein weiteres Beispiel bildet die jeweilige Position eines Auswurfkrümmers oder eines Korntankentleerrohrs in Bezug auf die Längsachse der Arbeitsmaschine. Die für die Positionierung von Auswurfkrümmer oder Korntankentleerrohr erforderlichen Steuerbefehle können von der Steuereinheit empfangen oder generiert werden, um daraus auf die bestehende Betriebssituation zu schließen.

Zusätzlich oder alternativ können Steuerbefehle zur Bestimmung der bestehenden Betriebssituation ausgewertet werden, welche die Fahrgeschwindigkeit der Arbeitsmaschine betreffen. Hierdurch lassen sich verschiedene geschwindigkeitsabhängige Betriebssituationen erkennen und unterscheiden.

Insbesondere kann durch eine an den Tragarmen angeordnete Lastüberwachungsvorrichtung eine auf den in der Betriebsposition befindlichen Tragarm ausgeübte mechanische Belastung detektiert werden. Hierdurch kann eine Beschädigung zumindest der Tragarme vermieden werden, indem auf eine übermäßige mechanische Belastung reagiert wird.

Hierzu kann von der Lastüberwachungsvorrichtung ein Signal an die Steuereinheit zur Auswertung übertragen werden, wobei in Abhängigkeit vom Ergebnis der Auswertung eine Maßnahme durch die Steuereinheit bestimmt und zumindest ein Steuerbefehl ausgegeben wird. Als eine Maßnahme kann eine Warnmeldung an den Bediener der Arbeitsmaschine ausgegeben werden. Durch die Warnmeldung kann der Bediener zu einer Reaktion veranlasst werden, durch welche eine Beschädigung der Tragarme vermieden werden kann. Alternativ oder zusätzlich kann die Fahrbewegung der Arbeitsmaschine unterbrochen werden, um Beschädigungen zu vermeiden.

Gemäß einer bevorzugten Weiterbildung kann der jeweilige optische Sensor durch Ansteuerung eines am freien Ende des Tragarms angeordneten weiteren Aktuators um eine vertikale Achse in eine Position geschwenkt werden, in welcher der optische Erfassungsbereich des jeweiligen optischen Sensors im Wesentlichen senkrecht zur Längsachse der Arbeitsmaschine orientiert ist. In dieser Seitenblick-Position kann der jeweilige optische Sensor die seitlich der Arbeitsmaschine liegenden Bereiche, d.h. die rechts und links von der Arbeitsmaschine befindlichen Bereiche, optisch erfassen.

Bevorzugt kann vorgesehen sein, dass sich die Tragarme in ihrer Transportposition befinden, während die optischen Sensoren situationsabhängig in die Seitenblick-Position überführt werden können. Dies ist insbesondere für Vorsatzgerät vorgesehen, deren Arbeitsbreite die für eine Straßenfahrt zulässige Breite nicht überschreitet. Für Vorsatzgeräte, die für eine Straßenfahrt zur Einhaltung der zulässigen Breite in eine Transportstellung überführt werden müssen, beispielsweise durch Klappen und/oder Falten, kann vorgesehen sein, dass die Tragarme durch die Ansteuerung der Aktuatoren in eine Zwischenposition überführt werden, in der die Sensoren durch die weiteren Aktuatoren in die Seitenblick-Position überführbar sind.

Insbesondere können die beiden optischen Sensoren des Sensorsystems einander gegenüberliegend an dem Vorsatzgerät angeordnet sein, wobei der jeweilige optische Sensor durch die voneinander unabhängige Ansteuerung der Aktuatoren durch die Steuereinheit in die Transportposition oder die Betriebsposition überführt wird.

Die bevorzugt endseitige Anordnung der beiden optischen Sensoren in den äußeren Randbereichen des Vorsatzgerätes ermöglicht dem Bediener der Arbeitsmaschine während des Betriebes eine klare Sicht auf diese oftmals schwer einsehbaren bzw. überschaubaren Bereiche. Vorzugsweise kann zumindest einer der beiden optischen Sensoren in der Betriebsposition abschnittsweise seitlich über das Vorsatzgerät hinausragen.

In der Betriebsposition kann der Aktuator des einen Tragarmes angesteuert werden, um diesen in die Betriebsposition zu überführen, während der Aktuator des anderen Tragarmes angesteuert wird, um diesen in die Transportposition zu überführen. Dies kann beispielsweise in Betriebssituationen der Fall sein, in denen stehendes Erntegut aufgrund seiner Wuchshöhe Beschädigung am Tragarm sowie am Sensor verursachen kann. In einer solchen Betriebsposition befindet sich somit nur der Tragarm mit daran angeordnetem Sensor in der Betriebsposition, welcher sich auf der dem abzuerntenden Erntegut abgewandten Seite befindet.

Gemäß einer Weiterbildung können in Abhängigkeit von der durch die Steuereinheit bestimmten bestehenden Betriebssituation von zumindest einem der beiden optischen Sensoren erfasste Bilddaten auf einer Anzeigevorrichtung der Arbeitsmaschine ausgegeben werden.

Insbesondere kann als eine Betriebssituation der Arbeitsmaschine ein Feldbetrieb oder eine Straßenfahrt bestimmt werden. Während des Feldbetriebes kann sich zumindest ein Tragarm mit daran angeordnetem Sensor in der Betriebsposition befinden. Hingegen können sich während der Straßenfahrt beide Tragarme mit den daran angeordneten Sensoren in der Regel in der Transportposition befinden, um eine Gefährdung von Verkehrsteilnehmern sowie Beschädigungen zu vermeiden. Der Feldbetrieb oder die Straßenfahrt lassen sich unter anderen aufgrund der Fahrgeschwindigkeit der Erntemaschine bestimmen. Ein weiterer Indikator kann die Schaltstellung eines sogenannten Straßenfahrschalters sein.

Des Weiteren kann im Feldbetrieb die Ansteuerung der Aktuatoren auf einer Positionsbestimmung mittels einer Abarbeitungskarte und/oder einem Anschneiden eines Feldbestandes basieren. Beim Anschneiden von Feldern ist eine präzise Steuerung erforderlich, um die Arbeit korrekt und effizient zu beginnen. Um der Gefahr zu begegnen, dass das Vorsatzgerät selbst beschädigt wird, wenn Hindernisse, beispielsweise Bäume, Äste, Fahrräder, sonstige Gegenstände oder Begrenzungen nicht rechtzeitig erkannt werden. Die Ansteuerung der Aktuatoren basierend auf der Positionsbestimmung mittels der Abarbeitungskarte berücksichtigt, welcher Teil eines Feldes bereits abgeerntet wurde und welcher Teil noch zu abzuernten ist. Bei einer Positionsbestimmung mittels der Abarbeitungskarte, wird der Tragarm mit dem daran angeordneten optischen Sensor auf der bereits abgeernteten Seite in die Betriebsposition ausgeschwenkt, um sicherzustellen, dass der optische Sensor nicht durch die noch zu erntenden Pflanzen beschädigt wird. Zusätzlich kann die Abarbeitungskarte verwendet werden, um automatisch ein Anschneiden des Feldbestandes zu erkennen.

Die Ansteuerung der Aktuatoren basierend auf dem Vorgang des Anschneidens des Feldbestandes kann in Abhängigkeit von einer Positionierung eines an der Arbeitsmaschine angeordneten und bezüglich der Längsachse der Arbeitsmaschine relativbeweglichen Arbeitsaggregates, insbesondere einer Überladevorrichtung erfolgen. Dabei kann das Anschneiden durch das Einfahren mitten in den Feldbestand oder durch ein Abernten am äußeren Rand des Feldbestands erfolgen.

Bei einem gleichzeitigen Überladen auf ein Abfuhrgespann kann durch Bestimmung der Position des bezüglich der Längsachse der Arbeitsmaschine relativbeweglichen Arbeitsaggregates, wie der Überladevorrichtung, auf die Position des Abfuhrgespanns in Bezug auf die Arbeitsmaschine geschlossen werden. Beim Einfahren mitten in den Feldbestand befindet sich das Abfuhrgespann hinter der Arbeitsmaschine, während das Abfuhrgespann beim Abernten am äußeren Rand des Feldbestands sich seitlich der Arbeitsmaschine bewegt. Entsprechend befinden sich die beiden Tragarme beim Einfahren mitten in den Feldbestand in der Transportposition. Hingegen kann einer der beiden Tragarme beim Abernten am äußeren Rand des Feldbestands auf die Seite des Abfuhrgespanns in die Betriebsposition ausgeschwenkt werden.

Bevorzugt kann die Steuereinheit ein trainiertes Maschinenlernmodell zur Verarbeitung der von den optischen Sensoren bereitgestellten Bilddaten ausführen. Bei dem trainierten Maschinenlernmodell kann es sich beispielsweise um ein trainiertes neuronales Netzwerk handeln. Durch die Verwendung eines trainierten neuronalen Netzwerks kann die Genauigkeit bei der Bestimmung des Betriebszustands "Straßenfahrt" oder "Feldbetrieb" gegenüber klassischen Methoden der Bildverarbeitung, die ebenfalls für die Bestimmung des Betriebszustands "Straßenfahrt" oder "Feldbetrieb" genutzt werden können, deutlich gesteigert werden. Darüber hinaus kann das trainierte Maschinenlernmodell zur Erkennung des Feldbestandes, zur Erkennung der Erntegutart und/oder zur Hindernisdetektion eingesetzt werden.

Die eingangs gestellte Aufgabe wird weiterhin durch ein Sensorsystem einer landwirtschaftlichen Arbeitsmaschine mit den Merkmalen des nebengeordneten Anspruches 11 gelöst.

Gemäß dem Anspruch 11 wird ein Sensorsystem einer landwirtschaftlichen Arbeitsmaschine, insbesondere einer selbstfahrenden Erntemaschine, vorgeschlagen, wobei das Sensorsystem am Vorsatzgerät der Arbeitsmaschine angeordnete optische Sensoren umfasst, die dazu eingerichtet sind, einen in Fahrtrichtung vor dem Vorsatzgerät befindlichen Bereich zu erfassen, wobei die optischen Sensoren an jeweils einem Tragarm angeordnet sind und jeweils durch zumindest einen Aktuator zwischen einer eingeschwenkten Transportposition und einer ausgeschwenkten Betriebsposition überführbar sind, wobei dem Sensorsystem eine Steuereinheit zugeordnet ist, die dazu eingerichtet ist, den zumindest einen Aktuator zur Einnahme der Transportposition oder der Betriebsposition durch den jeweiligen optischen Sensor in Abhängigkeit von einer durch die Steuereinheit bestimmten bestehenden Betriebssituation der Arbeitsmaschine automatisch anzusteuern. Auf die erfindungsgemäßen Ausführungen zum Verfahren zur Steuerung des Sensorsystems der landwirtschaftlichen Arbeitsmaschine darf verwiesen werden.

Insbesondere kann an den Tragarmen jeweils eine Lastüberwachungsvorrichtung zur Detektion einer auf den in der Betriebsposition befindlichen Tragarm ausgeübten mechanischen Belastung angeordnet sein, welche als Belastungssensor und/oder als ein Überlastungsschutzelement ausgeführt ist, welches bei einem Überschreiten einer auf das Überlastungsschutzelement ausgeübten Kraft mechanisch versagt. Als Überlastungsschutzelement kann beispielsweise ein Scherbolzen vorgesehen sein. Der Belastungssensor ist bevorzugt dazu ausgeführt und eingerichtet, auf den jeweiligen Tragarm einwirkende mechanische Kräfte zu detektieren. Von der als Belastungssensor ausgeführten Lastüberwachungsvorrichtung kann ein Signal an die Steuereinheit zur Auswertung übertragbar sein. Die Steuereinheit kann dazu eingerichtet sein, in Abhängigkeit vom Ergebnis der Auswertung eine auszuführende Maßnahme zu bestimmen und zumindest einen Steuerbefehl, beispielsweise an zumindest einen Aktuator oder zur Generierung eines Warnhinweises, auszugeben. Als ein Beispiel für einen Belastungssensor kann ein Dehnungsmesstreifen oder ein Beschleunigungssensor angesehen werden.

Gemäß einer Weiterbildung kann die Steuereinheit dazu eingerichtet sein, in Abhängigkeit von der bestimmten bestehenden Betriebssituation von zumindest einem der beiden optischen Sensoren erfasste Bilddaten auf einer Anzeigevorrichtung der Arbeitsmaschine auszugeben. Bei der Feldfahrt werden in der Regel nur Bilddaten des dem Feldbestand abgewandt angeordneten und in Betriebsposition befindlichen Sensors erfasst und ausgegeben. In Abhängigkeit von der Wuchshöhe des Feldbestands können sich auch beide Sensoren in ihrer Betriebsposition befinden und Bilddaten erfassen, die auf der Anzeigevorrichtung der Arbeitsmaschine ausgegeben werden.

Tritt bei einer Feldfahrt die Betriebssituation auf, dass sich zu beiden Seiten des Vorsatzgerätes und damit der Sensoren Feldbestand befindet, kann einer der beiden Sensoren, bei entsprechender Bestimmung durch die Steuereinheit, durch die Ansteuerung der Aktuatoren der Tragarme in die Transportposition überführt werden, wobei der weitere Aktuator angesteuert wird, um diesen Sensor in die Seitenblick-Position zu überführen. Dies kann von der Steuereinheit automatisch durchgeführt werden oder dem Bediener der Arbeitsmaschine automatisch zur Auswahl angeboten werden.

Gemäß einer Weiterbildung kann die Steuereinheit dazu eingerichtet sein, bei einer Straßenfahrt der Arbeitsmaschine durch Auswertung von empfangenen Positionsbestimmungssignalen und/oder aufgenommenen Bilddaten das Heranfahren an Kreuzungen oder Einmündungen zu bestimmen und in Abhängigkeit von einem auszuführenden Fahrmanöver die Ausgabe der Bilddaten nur eines oder beider optischer Sensoren auf der Anzeigevorrichtung anzusteuern. Das auszuführende Fahrmanöver kann durch die Auswertung eines durch ein manuell zu betätigendes Bedienelement generierten Steuersignals zur Fahrtrichtungsänderung bestimmt werden. Dabei kann automatisch die Anzeigevorrichtung angesteuert werden, um die von zumindest einer der sich in Seitenblick-Position befindlichen optischen Sensoren empfangenen Bilddaten anzuzeigen. Alternativ oder zusätzlich können Bilddaten beispielsweise von einer an der Arbeitsmaschine angeordneten Straßenfahrtkamera aufgenommen werden, um durch deren Auswertung das Heranfahren an Kreuzungen oder Einmündungen zu bestimmen.

Bei Detektion einer Geradeausfahrt als Fahrmanöver kann die Steuereinheit die Ausgabe der Bilddaten beider optischer Sensoren auf der Anzeigevorrichtung ansteuern. Bei einer Detektion einer Fahrtrichtungsänderung als Fahrmanöver kann die Steuereinheit die Ausgabe nur der Bilddaten auf der Anzeigevorrichtung ansteuern, welche von dem optischen Sensor erfasst werden, welcher auf der der Fahrtrichtungsänderung entsprechenden Seite angeordnet ist.

Im Kreuzungsbereich werden bevorzugt die Bilddaten beider optischer Sensoren nebeneinander durch die der Anzeigevorrichtung angezeigt. Durch eine Auswahl eines der dargestellten Bilder kann dieses vergrößert werden, während das andere Bild verkleinert am Rand sichtbar bleibt. Eine erneute Auswahl des verkleinerten Bildes stellt wieder beide Bilder wieder nebeneinander dar. Die Auswahl kann beispielsweise durch das Berühren des Bereiches der berührungssensitiv ausgeführten Anzeigevorrichtung erfolgen, auf welchem das zu vergrößernde Bild wiedergegeben wird.

Eine Querverkehrswarnung im Kreuzungsbereich oder im Beinmündungsbereich kann durch die Erkennung anderer Verkehrsteilnehmer im Bild erfolgen, wobei der Bediener entsprechend gewarnt wird. Diese Warnung könnte durch künstliche Intelligenz realisiert werden, indem erkannte Objekte im Bild hervorgehoben und der Bediener darüber informiert wird, von welcher Seite sich der andere Verkehrsteilnehmer nähert.

Weiterhin kann die Steuereinheit dazu eingerichtet sein, bei einer Feldfahrt in Abhängigkeit von einer Positionierung eines an der Arbeitsmaschine angeordneten und bezüglich der Längsachse der Arbeitsmaschine relativbeweglichen Arbeitsaggregates die Ausgabe der Bilddaten auf der Anzeigevorrichtung anzusteuern. Als selbstfahrende Erntemaschinen ausgeführte Arbeitsmaschinen weisen zum Überladen von aufgenommenem Erntegut eine Überladevorrichtung auf, die zu zumindest einer Seite ausgeschwenkt werden kann. Bei einem Feldhäcksler bildet ein Auswurfkrümmer eine Überladevorrichtung. Bei einem Mähdrescher ist die Überladevorrichtung ein Korntankentleerrohr, welches in Bezug auf die Längsachse der Arbeitsmaschine verschwenkt wird. Die für die Positionierung von Auswurfkrümmer oder Korntankentleerrohr erforderlichen Steuerbefehle können von der Steuereinheit empfangen oder generiert werden, um daraus auf die bestehende Betriebssituation zu schließen.

Die vorliegende Erfindung wird nachstehend anhand eines in den Zeichnungen dargestellten Ausführungsbeispieles näher erläutert.

Es zeigen:
- Fig. 1: schematisch und exemplarisch ein als selbstfahrender Feldhäcksler ausgeführte landwirtschaftliche Arbeitsmaschine,
- Fig. 2: schematisch und exemplarisch eine Teilansicht eines an der Arbeitsmaschine angeordneten Vorsatzgerätes; und
- Fig. 3: schematisch und exemplarisch eine Teilansicht des an der Arbeitsmaschine angeordneten Vorsatzgerätes gemäß Fig. 2 von hinten.

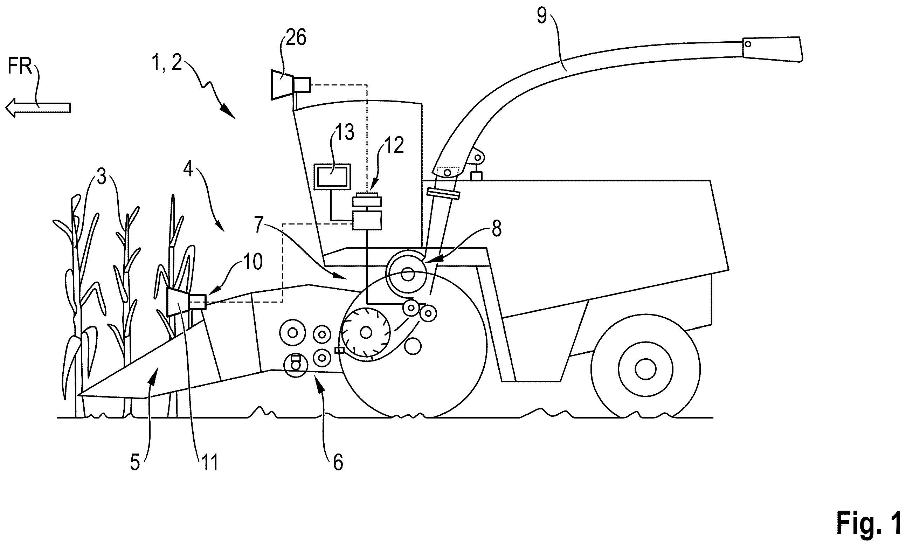

Fig. 1 zeigt schematisch und exemplarisch eine als selbstfahrender Feldhäcksler 2 ausgeführte Arbeitsmaschine 1 beim Abernten eines Bestandes von Pflanzen, insbesondere Maispflanzen 3, auf einem Feld. Eine Aufnahmevorrichtung 4 des Feldhäckslers 2 umfasst in an sich bekannter Weise einen in Anpassung an das zu erntende Pflanzenmaterial austauschbares Vorsatzgerät 5 und eine Einzugseinrichtung 6 mit mehreren Walzenpaaren welche die Maispflanzen 3 von dem Vorsatzgerät 5 übernimmt, um es einer Häckselvorrichtung 7 zuzuführen. Ein Nachbeschleuniger 8 verleiht dem zerkleinerten Erntegut, hier den Maispflanzen 3, die notwendige Geschwindigkeit, um einen Auswurfkrümmer 9 zu durchlaufen und in ein (nicht dargestelltes) Begleitfahrzeug übergeladen zu werden.

Das Vorsatzgerät 5, die Einzugsvorrichtung 6, die Häckselvorrichtung 7, der Nachbeschleuniger 8 sowie der Auswurfkrümmer 9 und deren jeweilige Komponenten sind Arbeitsaggregate des Feldhäckslers 2, die dem Abernten der Maispflanzen 3 des Feldbestandes und/oder der Bearbeitung der Maispflanzen 3 des Feldbestandes im Rahmen des Ernteprozesses dienen.

Die landwirtschaftliche Arbeitsmaschine 1 umfasst ein Sensorsystem 10. Das Sensorsystem 10 weist am Vorsatzgerät 5 der Arbeitsmaschine 1 angeordnete optische Sensoren 11 auf, durch welche ein in Fahrtrichtung FR vor dem Vorsatzgerät 5 befindlicher Bereich erfasst wird. Die optischen Sensoren 11, von denen nur einer in Fig. 1 sichtbar dargestellt ist, sind als Kameras ausgeführt. Die zumindest zwei optischen Sensoren 11 sind einander gegenüberliegenden in den äußeren Endbereichen des Vorsatzgerätes 5 angeordnet.

Dem Sensorsystem 10 ist eine Steuereinheit 12 zugeordnet. Die Steuereinheit 12 kann Teil des Sensorsystems oder der Arbeitsmaschine 1 sein. Die optischen Sensoren 11 sind zur Übertragung von Bilddaten, die von den optischen Sensoren 11 bereitgestellt werden, mit der Steuereinheit 12 verbunden. In einer Fahrerkabine der Arbeitsmaschine 1 ist eine Anzeigevorrichtung 13 angeordnet, welche durch die Steuereinheit 12 zur Ausgabe von Bildern und Informationen angesteuert wird. Die optischen Sensoren 11 erfassen Bilder in Echtzeit, die direkt an die Anzeigevorrichtung 13 in der Fahrerkabine der Arbeitsmaschine 1 übertragen werden.

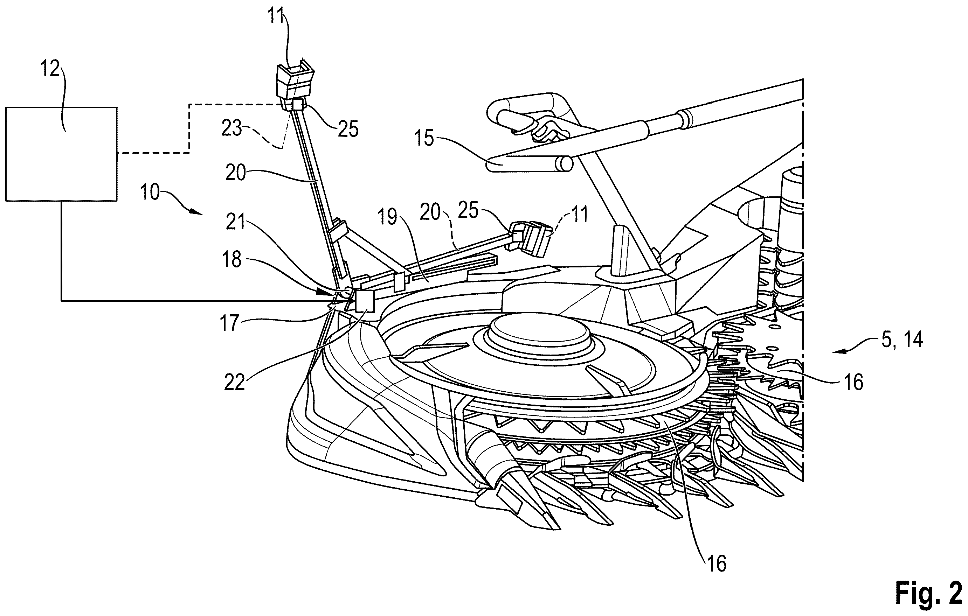

In Fig. 2 ist schematisch und exemplarisch eine perspektivische Teilansicht eines äußeren Endbereiches des an der Arbeitsmaschine 1 angeordneten Vorsatzgerätes 5 dargestellt. Das Vorsatzgerät 5 ist hier und vorzugsweise als sogenanntes Maisgebiss 14 ausgeführt, welches durch die Aufnahmevorrichtung 4 an dem Feldhäcksler 2 angeordnet ist.

Die Arbeitsmaschine 1 kann auch als ein selbstfahrender Mähdrescher ausgeführt sein, welcher beispielsweise ein Schneidwerk oder einen Maispflücker als Vorsatzgerät 5 aufweist, an dem die optischen Sensoren 11 des Sensorsystems 10 an den äußeren Randbereichen bzw. Endbereichen angeordnet sind. Bei einem Mähdrescher ist die Überladevorrichtung ein Korntankentleerrohr, welches in Bezug auf die Längsachse der Arbeitsmaschine 1 verschwenkt wird, um Erntegut zu überladen.

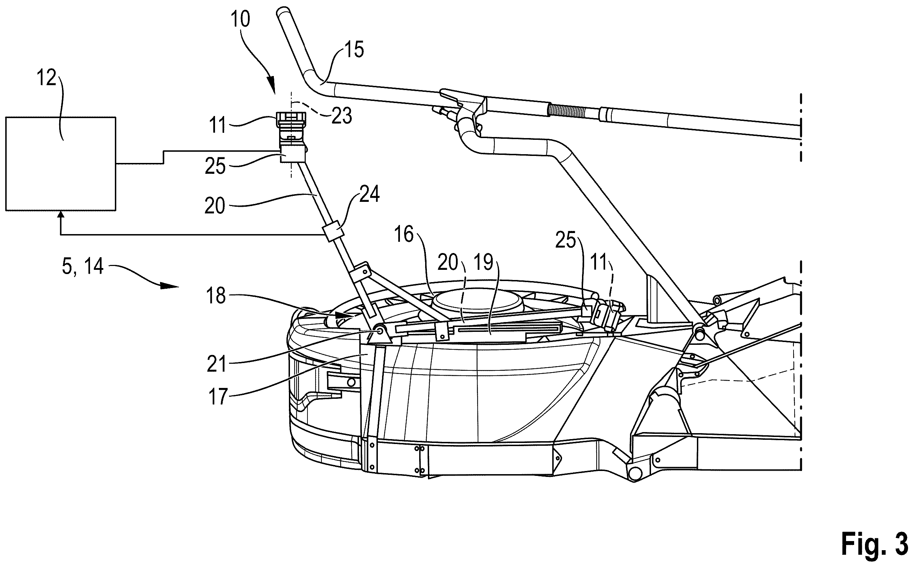

Die Darstellung in Fig. 3 zeigt schematisch und exemplarisch eine Teilansicht des an der Arbeitsmaschine 1 angeordneten Vorsatzgerätes 5 gemäß Fig. 2 von hinten.

Die nachstehende Beschreibung gilt für den nicht dargestellten gegenüberliegenden Endbereich des Vorsatzgerätes 5 respektive des Maisgebisses 14 entsprechend.

An dem Maisgebiss 14 können optional rohrförmige Einweisbügel 15 angeordnet sein, welche die Zuführung von Erntegut bei der Annahme durch rotierende Arbeitsorgane 16 unterstützen. Beispielsweise unterstützen die Einweisbügel 15 die Gutannahme von Maispflanzen 3 bei der Maisernte.

Am Rahmenelement 17 des Maisgebisses 14 ist eine Befestigungsanordnung 18 angeordnet, durch die der optische Sensor 11 des Sensorsystems 10 an dem Vorsatzgerät 5 respektive dem Maisgebiss 14 positionsveränderbar angeordnet ist.

Die Befestigungsanordnung 18 umfasst eine horizontal verlaufende Führungsschiene 19 an der ein Tragarm 20 um eine horizontale Schwenkachse 21 schwenkbar angelenkt ist. Der an dem jeweiligen Tragarm 20 angeordnete optische Sensor 11 ist durch zumindest einen Aktuator zwischen einer eingeschwenkten Transportposition, in welcher der jeweilige Tragarm 20 am Vorsatzgerät 5 anliegt, und einer ausgeschwenkten Betriebsposition, in welcher der jeweilige Tragarm 20 im Wesentlichen senkrecht zum Vorsatzgerät 5 orientiert ist, überführbar.

In der Transportposition befindet sich der Tragarm 20 in einer im Wesentlichen parallelen, am Vorsatzgerät 5 anliegenden Position. Der optische Sensor 11 wird hierzu um die horizontale Schwenkachse 21 nach innen geschwenkt, d.h. in Richtung des gegenüberliegend angeordneten optischen Sensors 11.

Die Schwenkachse 21 ist am äußeren randseitigen Ende des Vorsatzgerätes 5 angeordnet. In der Betriebsposition ist der am freien Ende des Tragarmes 20 angeordnete optische Sensor 11 oberhalb des äußersten Randbereichs des Vorsatzgerätes 5 positioniert oder ragt seitlich abschnittsweise darüber hinaus.

Der jeweilige Tragarm 20 ist durch einen - in Fig. 2 schematisch angedeuteten - Aktuator 22 um die Schwenkachse 21 verschwenkbar. Die Steuereinheit 12 ist zur Ansteuerung der Aktuatoren 22 ausgeführt und eingerichtet, durch welche die Tragarme 20 zwischen der Transportposition und der Betriebsposition überführbar sind.

Der am freien Ende des Tragarmes 20 angeordnete optische Sensor 11 kann um eine vertikale Achse 23 mittels eines weiteren Aktuators 25 schwenkbar ausgeführt sein. Auf diese Weise kann der optische Sensor 11 in eine Seitenblick-Position überführt werden.

In der Seitenblick-Position kann der jeweilige optische Sensor 11 die seitlich der Arbeitsmaschine 1 liegenden Bereiche, d.h. die rechts und links von der Arbeitsmaschine 1 befindlichen Bereiche, optisch erfassen.

Der jeweilige Tragarm mit dem daran angeordneten optischen Sensor 11 kann durch die voneinander unabhängige Ansteuerung der Aktuatoren 22, 25 durch die Steuereinheit 12 in die Transportposition oder die Betriebsposition überführt werden.

Wie in Fig. 3 schematisch dargestellt, kann an dem jeweiligen Tragarm 20 zudem eine Lastüberwachungsvorrichtung 24 angeordnet sein. Durch die Lastüberwachungsvorrichtung 24 kann eine auf den in der Betriebsposition befindlichen Tragarm 20 ausgeübte mechanische Belastung durch Erntegut detektiert werden. Die Lastüberwachungsvorrichtung 24 kann als Belastungssensor und/oder als ein Überlastungsschutzelement ausgeführt sein. Der Belastungssensor kann beispielsweise als ein Dehnungsmesstreifen ausgeführt sein. Als Überlastungsschutzelement kann beispielsweise ein Scherbolzen vorgesehen sein, welcher bei einem Überschreiten einer auf das Überlastungsschutzelement ausgeübten Kraft mechanisch versagt.

Bei einer als Belastungssensor ausgeführten Lastüberwachungsvorrichtung 24 werden die von dem Belastungssensor bereitgestellten Signale an die Steuereinheit 12 zur Auswertung übertragen.

In Abhängigkeit vom Ergebnis der Auswertung der von der Lastüberwachungsvorrichtung 24 bereitgestellten Signale kann durch die Steuereinheit 12 eine Maßnahme bestimmt und zumindest ein Steuerbefehl ausgegeben werden. Als eine bestimmte Maßnahme kann eine Warnmeldung an den Bediener der Arbeitsmaschine 1 ausgegeben werden. Durch die Warnmeldung kann der Bediener zu einer Reaktion veranlasst werden, durch welche eine Beschädigung der Tragarme 20 vermieden werden kann. Alternativ oder zusätzlich kann die Fahrbewegung der Arbeitsmaschine 1 unterbrochen werden, um Beschädigungen zu vermeiden.

Zur Steuerung des Sensorsystems 10 der landwirtschaftlichen Arbeitsmaschine 1 ist vorgesehen, dass zur Einnahme der Transportposition oder der Betriebsposition durch den jeweiligen optischen Sensor 11 der zumindest eine Aktuator 22, durch welchen der jeweilige Tragarm 20 zwischen der Transportposition und der Betriebsposition überführt wird, in Abhängigkeit von einer durch die Steuereinheit 12 der Arbeitsmaschine 1 bestimmte bestehende Betriebssituation der Arbeitsmaschine 1 automatisch angesteuert wird.

Als eine Betriebssituation der Arbeitsmaschine 1 wird ein Feldbetrieb oder eine Straßenfahrt bestimmt. Hierzu wird die bestehende Betriebssituation durch die Auswertung eines von der Steuereinheit 12 empfangenen und/oder von der Steuereinheit 12 oder einer zusätzlichen Steuerungsvorrichtung der Arbeitsmaschine 1 generierten Steuerbefehls zur Ansteuerung eines Arbeitsaggregates der Arbeitsmaschine 1 und/oder eines empfangenen Positionsbestimmungssignals bestimmt.

So kann durch die manuelle Betätigung des sogenannten Straßenfahrschalters durch einen Bediener der Arbeitsmaschine 1 auf einen Wechsel der Betriebssituation zwischen Feldbetrieb und Straßenfahrt geschlossen werden. Wird der Straßenfahrschalter betätigt, um in die Betriebssituation Straßenfahrt zu wechseln, können die Aktuatoren 22 automatisch angesteuert werden, um die Tragarm 20 und die daran angeordneten optischen Sensoren 11 in die Transportposition zu überführen.

Bei einem Wechsel von der Straßenfahrt in den Feldbetrieb, was durch die Steuereinheit 12 ebenfalls durch die Betätigung des Straßenfahrschalters bestimmt wird, verbleiben die Tragarm 20 und die daran angeordneten optischen Sensoren 11 zunächst in der Transportposition.

Bevorzugt kann die Steuereinheit 12 ein trainiertes Maschinenlernmodell zur Verarbeitung der von den optischen Sensoren 11 bereitgestellten Bilddaten ausführen. Bei dem trainierten Maschinenlernmodell kann es sich beispielsweise um ein trainiertes neuronales Netzwerk handeln. Durch die Verwendung eines trainierten neuronalen Netzwerks kann die Genauigkeit bei der Bestimmung des Betriebszustands "Straßenfahrt" oder "Feldbetrieb" gegenüber klassischen Methoden der Bildverarbeitung, die ebenfalls für die Bestimmung des Betriebszustands "Straßenfahrt" oder "Feldbetrieb" genutzt werden können, deutlich gesteigert werden. Darüber hinaus kann das trainierte Maschinenlernmodell zur Erkennung des Feldbestandes, zur Erkennung der Erntegutart und/oder zur Hindernisdetektion eingesetzt werden.

Die Positionierung der optischen Sensoren 11 des Sensorsystems 10 erfolgt in Abhängigkeit von der bestimmten Betriebssituation, dem Feldbetrieb oder der Straßenfahrt, wobei betriebssituationsspezifisch auf weitere Indikatoren reagiert wird, die zur Ansteuerung der jeweiligen Aktuatoren 22, 25 verwendet werden.

Bei der Straßenfahrt der Arbeitsmaschine 1 als Betriebssituation kann durch Auswertung von empfangenen Positionsbestimmungssignalen und/oder von den optischen Sensoren 11 und/oder einer optional an der Arbeitsmaschine 1 angeordneten Straßenfahrtkamera 26, deren Erfassungsbereich in Fahrtrichtung FR orientiert ist, aufgenommenen Bilddaten das Heranfahren an Kreuzungen oder Einmündungen bestimmt werden. In Abhängigkeit von einem auszuführenden Fahrmanöver kann die Ausgabe der Bilddaten nur eines oder beider optischer Sensoren 11 auf der Anzeigevorrichtung 13 durch die Steuereinheit 12 angesteuert werden.

So kann bei Detektion einer Geradeausfahrt als Fahrmanöver die Ausgabe der Bilddaten beider optischer Sensoren 11 auf der Anzeigevorrichtung 13 angesteuert werden.

Bei einer Detektion einer Fahrtrichtungsänderung als Fahrmanöver kann die Ausgabe der erfassten Bilddaten auf der Anzeigevorrichtung 13 angesteuert werden, welche von dem optischen Sensor 11 erfasst werden, welcher auf der der Fahrtrichtungsänderung entsprechenden Seite angeordnet ist. Hierzu kann der jeweilige weitere Aktuator 25 durch die Steuereinheit 12 angesteuert werden, um den entsprechenden optischen Sensor 11 in die Seitenblick-Position zu überführen. Das auszuführende Fahrmanöver kann durch die Auswertung eines durch ein manuell zu betätigendes Bedienelement generierten Steuersignals zur Fahrtrichtungsänderung bestimmt werden.

Bevorzugt können auch bei einer Fahrtrichtungsänderung als Fahrmanöver die erfassten Bilddaten beider in Seitenblick-Position befindlicher optischer Sensoren 11 durch die Anzeigevorrichtung 13 wiedergegeben werden. Der Bediener der Arbeitsmaschine 1 kann diese Darstellung wahlweise übersteuern und sich bei einer Fahrtrichtungsänderung nur die Bilddaten eines der beiden optischer Sensoren 11 durch die Anzeigevorrichtung 13 anzeigen lassen.

Beim Feldbetrieb der Arbeitsmaschine 1 als Betriebssituation basiert die Ansteuerung der Aktuatoren 22, 25 auf einer Positionsbestimmung mittels einer Abarbeitungskarte und/oder auf einem Anschneiden eines Feldbestandes. Zusätzlich oder alternativ kann die Steuereinheit 12 dazu eingerichtet sein, bei einer Feldfahrt in Abhängigkeit von einer Positionierung eines an der Arbeitsmaschine 1 angeordneten und bezüglich der Längsachse der Arbeitsmaschine 1 relativbeweglichen Arbeitsaggregates, im Fall des Feldhäckslers 2 der Positionierung des Auswurfkrümmers 9, die Ausgabe der Bilddaten auf der Anzeigevorrichtung 13 anzusteuern.

Die in einer Speichereinheit der Steuereinheit 12 hinterlegte oder hinterlegbare Abarbeitungskarte ist eine auf einer Positionsbestimmung basierende Karte, die zeigt, welcher Teil eines Feldes bereits abgeerntet wurde und welcher Teil noch abzuernten ist. Bei einer Positionsbestimmung mittels der Abarbeitungskarte, wird der Tragarm 20 mit dem daran angeordneten optischen Sensor 11 auf der bereits abgeernteten Seite in die Betriebsposition ausgeschwenkt, um sicherzustellen, dass der optische Sensor 11 nicht durch die noch zu erntenden Pflanzen beschädigt wird. Zusätzlich kann die Abarbeitungskarte verwendet werden, um automatisch eine Anhäcksel-Situation oder eine Durchstech-Situation zu erkennen.

Bei einer Ansteuerung der Aktuatoren 22 bei einer Feldfahrt in Abhängigkeit von der Positionierung des Auswurfkrümmers 9 als Beispiel für das an der Arbeitsmaschine 1 angeordnete und bezüglich der Längsachse der Arbeitsmaschine 1 relativbewegliche Arbeitsaggregat wird die Position des Auswurfkrümmers 9 bestimmt. Hierzu können die zum Schwenken generierten Steuerbefehle durch die Steuereinheit 12 empfangen und ausgewertet werden. Alternativ kann die Steuereinheit 12 selbst die Steuerbefehle zum Schwenken generieren. In Abhängigkeit von der Schwenkrichtung wird im Erntebetrieb auf die seitliche Position eines Abfuhrgespanns in Bezug auf die Arbeitsmaschine 1 geschlossen. Entsprechend wird der jeweilige optische Sensor 11 am Vorsatzgerät 5 respektive Maisgebiss 14 durch die Ansteuerung des entsprechenden Aktuators 22 auf die Seite des Abfuhrgespanns in die Betriebsposition ausgeschwenkt. Das Betätigen eines Bedienelementes zur Änderung der Position des Auswurfkrümmers 9 kann automatisch einen Wechsel zwischen der Betriebsposition und der Transortposition der Tragarme 20 mit den daran angeordneten optischen Sensoren 11 initiieren.

Beim Anschneiden eines Feldbestands kann zwischen der Durchstech-Situation, in welcher mitten durch den Feldbestand gefahren wird, und der Anhäcksel-Situation, in der am äußeren Rand in den Feldbestand eingefahren wird, unterschieden werden.

In der Durchstech-Situation wird der Auswurfkrümmer 9 nach hinten geschwenkt, so dass die Steuereinheit 12 die Position des Auswurfkrümmers 9 dahingehend bestimmt, dass das Abfuhrgespann hinter der Feldhäcksler 2 fährt und sich auf beiden Seiten des Vorsatzgeräts 5 respektive Maisgebisses 14 der zu erntende Bestand befindet. In dieser Situation befinden sich beide optischen Sensoren 11 in der eingeschwenkten Transportposition, um Beschädigungen durch die Maispflanzen 3 zu vermeiden.

In der Anhäcksel-Situation können sich beide optischen Sensoren 11 standardmäßig in der eingeschwenkten Transportposition befinden. Eine Übersteuerung durch den Bediener ist jedoch möglich. Ist der Auswurfkrümmer 9 in der Anhäcksel-Situation nach hinten geschwenkt, so kann dem Bediener automatisch angeboten werden, eine der beiden optischen Sensoren 11 durch die Ansteuerung des weiteren Aktuators 25 in die Seitenblick-Position zu überführen. Außerdem kann die Abarbeitungskarte genutzt werden, um automatisch eine Anhäcksel-Situation oder eine Durchstech-Situation zu erkennen. Hierüber können auch automatisch die möglichen Positionsoptionen dem Bediener zur Übersteuerung angeboten werden.

### Bezugszeichenliste

- 1: Arbeitsmaschine
- 2: Feldhäcksler
- 3: Maispflanze
- 4: Aufnahmevorrichtung
- 5: Vorsatzgerät
- 6: Einzugsvorrichtung
- 7: Häckselvorrichtung
- 8: Nachbeschleuniger
- 9: Auswurfkrümmer
- 10: Sensorsystem
- 11: Sensor
- 12: Steuereinheit
- 13: Anzeigevorrichtung
- 14: Maisgebiss
- 15: Einweisbügel
- 16: Arbeitsorgan
- 17: Rahmenelement
- 18: Befestigungsanordnung
- 19: Führungsschiene
- 20: Tragarm
- 21: Schwenkachse
- 22: Aktuator
- 23: Achse
- 24: Lastüberwachungsvorrichtung
- 25: Aktuator
- 26: Straßenfahrtkamera

- FR: Fahrtrichtung

## Patentansprüche

1. Verfahren zur Steuerung eines Sensorsystems (10) einer landwirtschaftlichen Arbeitsmaschine (1), wobei durch am Vorsatzgerät (5) der Arbeitsmaschine (1) angeordnete optische Sensoren (11) des Sensorsystems (10) ein in Fahrtrichtung (FR) vor dem Vorsatzgerät (5) befindlicher Bereich erfasst wird, wobei die an jeweils einem Tragarm (20) angeordneten optischen Sensoren (11) jeweils durch zumindest einen Aktuator (22) zwischen einer eingeschwenkten Transportposition und einer ausgeschwenkten Betriebsposition überführt werden, **dadurch gekennzeichnet, dass** zur Einnahme der Transportposition oder der Betriebsposition durch den jeweiligen optischen Sensor (11) der zumindest eine Aktuator (22) in Abhängigkeit von einer durch eine dem Sensorsystem (10) zugeordnete Steuereinheit (12) bestimmten bestehenden Betriebssituation der Arbeitsmaschine (1) automatisch angesteuert wird.

2. Verfahren nach Anspruch 1, **dadurch gekennzeichnet, dass** die bestehende Betriebssituation durch die Auswertung eines von der Steuereinheit (12) empfangenen und/oder von der Steuereinheit (12) oder einer zusätzlichen Steuerungsvorrichtung der Arbeitsmaschine (1) generierten Steuerbefehls zur Ansteuerung eines Arbeitsaggregates der Arbeitsmaschine (1) und/oder eines empfangenen Positionsbestimmungssignals bestimmt wird.

3. Verfahren nach Anspruch 1 oder 2, **dadurch gekennzeichnet, dass** durch eine an den Tragarmen angeordnete Lastüberwachungsvorrichtung (24) eine auf den in der Betriebsposition befindlichen Tragarm (20) ausgeübte mechanische Belastung detektiert wird.

4. Verfahren nach Anspruch 3, **dadurch gekennzeichnet, dass** von der Lastüberwachungsvorrichtung (24) ein Signal an die Steuereinheit (12) zur Auswertung übertragen wird, wobei in Abhängigkeit vom Ergebnis der Auswertung eine Maßnahme durch die Steuereinheit (12) bestimmt und zumindest ein Steuerbefehl ausgegeben wird.

5. Verfahren nach einem der vorangehenden Ansprüche, **dadurch gekennzeichnet, dass** der jeweilige optische Sensor (11) durch Ansteuerung eines am freien Ende des Tragarms (20) angeordneten weiteren Aktuators (25) um eine vertikale Achse (23) in eine Position geschwenkt wird, in welcher der optische Erfassungsbereich des jeweiligen optischen Sensors (11) im Wesentlichen senkrecht zur Längsachse der Arbeitsmaschine (1) orientiert ist.

6. Verfahren nach einem der vorangehenden Ansprüche, **dadurch gekennzeichnet, dass** die beiden optischen Sensoren (11) des Sensorsystems (10) einander gegenüberliegend an dem Vorsatzgerät (5) angeordnet sind, wobei der jeweilige optische Sensor (11) durch die voneinander unabhängige Ansteuerung der Aktuatoren (22) durch die Steuereinheit (12) in die Transportposition oder die Betriebsposition überführt wird.

7. Verfahren nach einem der vorangehenden Ansprüche, **dadurch gekennzeichnet, dass** in Abhängigkeit von der durch die Steuereinheit (12) bestimmten bestehenden Betriebssituation von zumindest einem der beiden optischen Sensoren (11) erfasste Bilddaten auf einer Anzeigevorrichtung (13) der Arbeitsmaschine (1) ausgegeben werden.

8. Verfahren nach einem der vorangehenden Ansprüche, **dadurch gekennzeichnet, dass** als eine Betriebssituation der Arbeitsmaschine (1) ein Feldbetrieb oder eine Straßenfahrt bestimmt wird.

9. Verfahren nach Anspruch 8, **dadurch gekennzeichnet, dass** im Feldbetrieb die Ansteuerung der Aktuatoren (22) auf einer Positionsbestimmung mittels einer Abarbeitungskarte und/oder auf einem Anschneiden eines Feldbestandes basiert.

10. Verfahren nach einem der vorangehenden Ansprüche, **dadurch gekennzeichnet, dass** die Steuereinheit (12) ein trainiertes Maschinenlernmodell zur Verarbeitung der von den optischen Sensoren (11) bereitgestellten Bilddaten ausführt.

11. Sensorsystem (10) für eine landwirtschaftliche Arbeitsmaschine (1), insbesondere einer selbstfahrenden Erntemaschine, wobei das Sensorsystem (10) am Vorsatzgerät (5) der Arbeitsmaschine (1) angeordnete optische Sensoren (11) umfasst, die dazu eingerichtet sind, einen in Fahrtrichtung (FR) vor dem Vorsatzgerät (5) befindlichen Bereich zu erfassen, wobei die optischen Sensoren (11) an jeweils einem Tragarm (20) angeordnet sind und jeweils durch zumindest einen Aktuator (22) zwischen einer eingeschwenkten Transportposition und einer ausgeschwenkten Betriebsposition überführbar sind, **dadurch gekennzeichnet, dass** dem Sensorsystem (10) eine Steuereinheit (12) zugeordnet ist, die dazu eingerichtet ist, den zumindest einen Aktuator (22) zur Einnahme der Transportposition oder der Betriebsposition durch den jeweiligen optischen Sensor (11) in Abhängigkeit von einer durch die Steuereinheit (12) bestimmten bestehenden Betriebssituation der Arbeitsmaschine (1) automatisch anzusteuern.

12. Sensorsystem (10) nach Anspruch 11, **dadurch gekennzeichnet, dass** an den Tragarmen (20) jeweils eine Lastüberwachungsvorrichtung (24) zur Detektion einer auf den in der Betriebsposition befindlichen Tragarm (20) ausgeübten mechanischen Belastung angeordnet ist, welche als Belastungssensor und/oder als ein Überlastungsschutzelement ausgeführt ist, welches bei einem Überschreiten einer auf das Überlastungsschutzelement ausgeübten Kraft mechanisch versagt.

13. Sensorsystem (10) nach Anspruch 11 oder 12, **dadurch gekennzeichnet, dass** die Steuereinheit (12) dazu eingerichtet ist, in Abhängigkeit von der bestimmten bestehenden Betriebssituation von zumindest einem der beiden optischen Sensoren (11) erfasste Bilddaten auf einer Anzeigevorrichtung (13) der Arbeitsmaschine (1) auszugeben.

14. Sensorsystem (10) nach Anspruch 13, **dadurch gekennzeichnet, dass** die Steuereinheit (12) dazu eingerichtet ist, bei einer Straßenfahrt der Arbeitsmaschine (1) durch Auswertung von empfangenen Positionsbestimmungssignalen und/oder Bilddaten das Heranfahren an Kreuzungen oder Einmündungen zu bestimmen und in Abhängigkeit von einem auszuführenden Fahrmanöver die Ausgabe der Bilddaten nur eines oder beider optischer Sensoren (11) auf der Anzeigevorrichtung (13) anzusteuern.

15. Sensorsystem (10) nach Anspruch 13 oder 14, **dadurch gekennzeichnet, dass** die Steuereinheit (12) dazu eingerichtet ist, bei einer Feldfahrt in Abhängigkeit von einer Positionierung eines an der Arbeitsmaschine (1) angeordneten und bezüglich der Längsachse der Arbeitsmaschine (1) relativbeweglichen Arbeitsaggregates die Ausgabe der Bilddaten auf der Anzeigevorrichtung (13) anzusteuern.
